Europäisches Patentamt

European Patent Office

Office européen des brevets

(11) Numéro de publication: **0 346 216**
**A1**

## (12) DEMANDE DE BREVET EUROPEEN

(21) Numéro de dépôt: **89401563.5**

(51) Int. Cl.⁴: **F 16 K 5/20**

(22) Date de dépôt: **06.06.89**

(30) Priorité: **07.06.88 FR 8807568**

(43) Date de publication de la demande:
**13.12.89 Bulletin 89/50**

(84) Etats contractants désignés:
**AT BE CH DE ES GB GR IT LI SE**

(71) Demandeur: **Etablissements NEU Société Anonyme dite:**
**70, rue du Collège**
**F-59700 Marcq-en-Baroeul (FR)**

(72) Inventeur: **Jodlowski, Czeslaw François**
**6, rue de L'Abbé Lemire**
**F-59700 Marcq-en-Baroeul (FR)**

**Maunder, Andrew**
**Bunkers Hill Farm**
**Unstead Godalming Surrey GU71 UP (GB)**

(74) Mandataire: **Casalonga, Axel et al**
**BUREAU D.A. CASALONGA - JOSSE Morassistrasse 8**
**D-8000 München 5 (DE)**

(54) **Vanne à calotte sphérique.**

(57) Vanne à boisseau sphérique dont la calotte sphérique (1) est dissociée du tournant (2), et raccordée de manière étanche à celui-ci par l'intermédiaire d'une membrane flexible métallique (9), de manière à constituer entre les deux une chambre à air (14) raccordée à une alimentation extérieure (22) d'air de commande, ladite membrane flexible métallique (9) jouant en même temps le rôle de rappel élastique de la calotte sphérique dans une position telle, qu'en l'absence de pression dans la chambre à air (14), la calotte sphérique demeure à faible distance de la surface du joint (25).

FIG. 1

## Description

### Vanne à calotte sphérique

L'invention concerne les vannes destinées principalement à isoler les réservoirs sous pression de gaz contenant des produits solides en vrac sous forme granuleuse ou pulvérulente.

De telles vannes sont connues et utilisées, en particulier, dans le domaine des installations de manutention pneumatique de produits en vrac, sous la forme d'un boisseau sphérique qui vient en contact avec un joint fixe ou gonflable. Elles sont utilisées pour assurer, successivement, le remplissage du réservoir, l'arrêt de l'écoulement du produit en vrac, et l'étanchéité du réservoir lorsqu'il est mis en pression.

Lorsque la vanne est constituée d'un boisseau ou d'une calotte sphérique et d'un joint fixe, celui-ci s'use sous l'action du frottement du boisseau sphérique lors de son ouverture et de sa fermeture. Cette usure est accentuée par la présence des fines particules solides qui jouent le rôle d'abrasif lors des mouvements d'ouverture et de fermeture de la calotte sphérique. Ceci a pour effet de conduire à des fuites sur la vanne par manque d'étanchéité, et donc d'empêcher d'atteindre dans le réservoir la pression de gaz nécessaire au transport du produit par voie pneumatique.

Pour éviter les effets de ce frottement, il est connu, notamment d'après le document GB-A-20 539 079, d'assurer l'étanchéité par un joint gonflable qui est mis en pression une fois la vanne fermée pour venir s'appuyer sur la calotte sphérique. Cependant, ce joint subit néanmoins une détérioration qui est d'autant plus rapide que la température du produit est grande. D'ailleurs, pour des température élevées, de l'ordre de 250° C, ce type de joint devient extrêmement fragile et sa durée de vie se trouve réduite.

En outre, de tels joints gonflables, même à température ambiante, se détériorent assez rapidement par les mouvements alternés de gonflage et de dégonflage, et peuvent en cours d'opération se déchirer, ce qui a pour effet de provoquer une fuite de gaz poussiéreux dans l'atmosphère, laquelle fuite peut être dangereuse pour le personnel si le produit est toxique ou chaud.

Le but de l'invention est d'éliminer les inconvénients précédents, c'est-à-dire de mettre en oeuvre une vanne à calotte sphérique qui offre l'avantage d'éviter les frottements sur le joint lors de l'ouverture et de la fermeture de la vanne et de pouvoir être utilisée, même pour des produits chauds, sans détérioration du joint.

Ce but est atteint, conformément à l'invention, par le fait que la calotte sphérique est dissociée du tournant de la vanne, et est montée sur celui-ci par l'intermédiaire d'une membrane flexible métallique, de manière à être déplaçable radialement vers l'extérieur, par rapport à l'axe du tournant, grâce à une injection d'air comprimé, afin de venir alors porter sur un joint fixe pour assurer l'étanchéité.

Cette solution offre l'avantage de pouvoir manoeuvrer, pour la fermeture et l'ouverture de la vanne, la calotte sphérique sans qu'elle vienne en contact avec le joint.

En effet, lors des opérations d'ouverture et de fermeture pour établir et arrêter l'écoulement du produit, il existe normalement, pour la position de repose de la membrane flexible métallique, un jeu fonctionnel entre la calotte sphérique et le joint qui évite le frottement entres les deux pièces. Ce n'est que lorsque la calotte sphérique a atteint la position de fermeture, que la mise en pression d'une chambre, comprise entre la calotte sphérique et le tournant et refermée de manière étanche par la membrane, permet d'appliquer la calotte sur le joint.

Avant de procéder à l'ouverture de la vanne, on supprime la pression dans cette chambre, ce qui a pour effet de faire rapprocher la calotte sphérique de l'axe du tournant, grâce à l'élasticité propre de la membrane flexible métallique, de sorte que cette calotte n'est plus alors en contact avec le joint, ce qui permet également l'ouverture sans frottement.

D'autres particularités de l'invention apparaîtront dans la description qui va suivre d'un mode de réalisation pris comme exemple et représenté sur le dessin annexé, sur lequel :

la figure 1 est une coupe de la vanne selon l'axe de rotation; et

la figure 2 est une coupe partielle selon II-II de la figure 1, avec une variante de réalisation du joint.

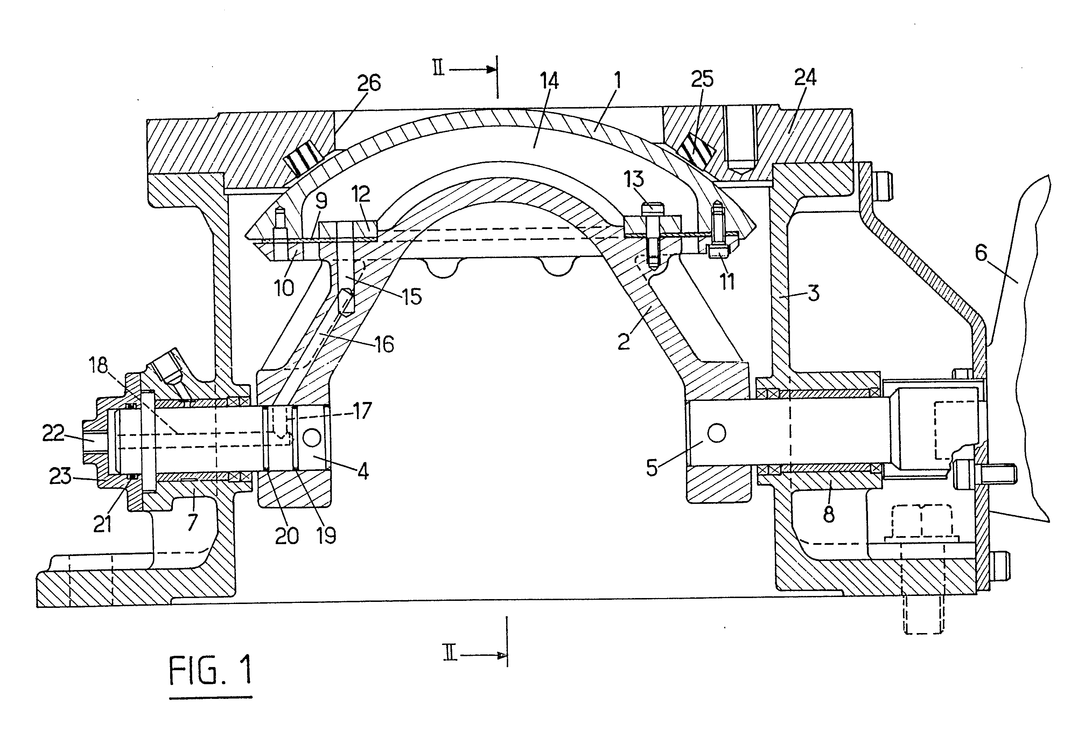

Comme on le voit notamment sur la figure 1, la calotte sphérique 1 est dissociée du tournant 2 de la vanne, lequel est monté tournant dans le corps 3 de la vanne au moyen de deux bouts d'axe 4 et 5, ce dernier servant à l'entraînement au moyen d'un organe moteur 6. Les deux bouts d'axe 4 et 5 sont dans le prolongement l'un de l'autre et tourillonnent dans des paliers 7 et 8 dotés des moyens d'étanchéité nécessaires.

Conformément à l'invention, la calotte sphérique 1, ainsi dissociée du tournant 2, est réunie à celui-ci par l'intermédiaire d'une membrane flexible métallique 9, affectant de préférence la forme d'une couronne circulaire dont les deux bords, extérieur et intérieur, sont réunis de manière étanche, l'un à la calotte sphérique 1, et l'autre au tournant 2.

Par exemple, le bord extérieur de la membrane 9 peut être raccordé sur la calotte sphérique 1 en étant pincé entre celle-ci et un anneau extérieur de fixation 10 resserré sur la calotte sphérique au moyen de vis telles que 11. De même, le bord intérieur de la membrane 9 peut être pincé sur le tournant 2 par l'intermédiaire d'un anneau intérieur de fermeture 12, lui-même fixé sur le tournant au moyen de vis telles que 13.

Cette double étanchéité permet, par conséquent, d'isoler une chambre à air intérieure 14 entre la calotte 1 et le tournant 2. Des percements convenables 15 et 16 dans le tournant 2 et la bague 12, ainsi que 17 et 18 dans le bout d'axe 4 non moteur, combinés avec des joints d'étanchéité convenables 19, 20 et 21, permettent de réunir en permanence l'intérieure de la chambre 14 avec un embout de raccordement extérieur 22 sur le chapeau 23 de fermeture du palier 7. Des canalisations et vannes ou électrovannes appropriées, non représentées, permettent ainsi d'établir dans la chambre 14 une pression d'air comprimé ou une mise à l'atmosphère tout en autorisant la rotation de l'ensemble.

Le corps 3 de la vanne est refermé par un couvercle 24 comportant le siège qui coopère avec la calotte sphérique 1 pour assurer la fermeture. Ce siège est constitué essentiellement par un joint d'étanchéité 25 disposé dans une gorge appropriée, et qui peut être un joint ordinaire, fixe, de n'importe quelle nature.

En effet, conformément à l'invention, la membrane flexible métallique 9 joue en même temps que son rôle de membrane un rôle de rappel élastique, de telle sorte qu'en l'absence de pression dans la chambre 14, la calotte sphérique 1 occupe une position bien déterminée par rapport à l'axe de rotation, et cette position est choisie de manière à laisser subsister un jeu fonctionnel convenable entre la surface extérieure sphérique de la calotte 1 et le joint 25, autorisant ainsi les mouvements de rotation, présidant à l'ouverture ou à la fermeture de la vanne, sans aucun frottement entre cette surface et ce joint.

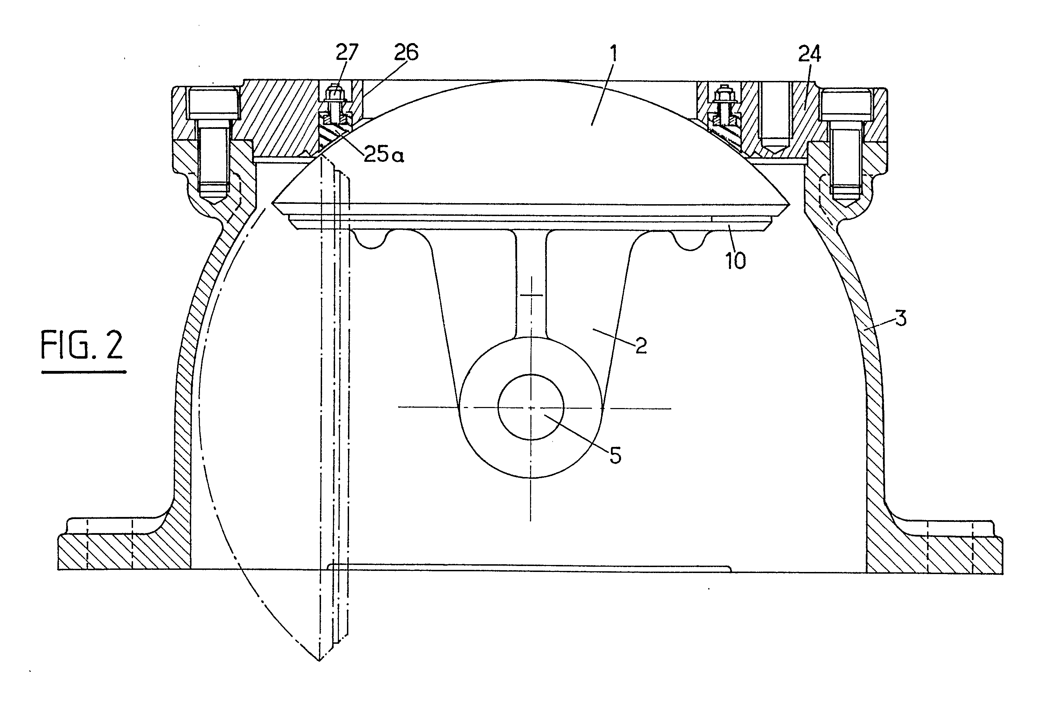

Au contraire, lorsque la calotte sphérique est en position de fermeture, telle que représentée en traits pleins sur les figures 1 et 2, on établit une pression d'air dans la chambre 14 à partir du raccordement 22 comme exposé ci-dessus, ce qui déforme la membrane 9 et écarte la calotte sphérique 1 de son axe de rotation, de manière à venir porter sur le joint 25. Inversement, lors de l'ouverture, on commence par relacher cette pression pour permettre à la calotte sphérique 1 de se rapprocher de l'axe et permettre ensuite la rotation présidant à l'ouverture sans frottement sur le joint 25.

La forme du tournant 2 telle que représentée sur la figure 1, est suffisamment dégagée dans sa partie centrale pour que, une fois que le tournant 2 a tourné de 90°, comme représenté en trait mixte sur la figure 2, ce tournant 2 dégage entièrement un passage cylindrique à l'aplomb de l'orifice de passage 26 du couvercle 24. De cette manière, ce tournant 2, lorsqu'il est en position ouverte, ne constitue aucun obstacle à l'écoulement du produit solide, en particulier lorsque la vanne est utilisée en position verticale comme sur les figures.

Grâce à l'invention, le joint 25 ne subit aucun frottement et n'a donc pas à répondre à des spécifications particulières.

Dans le cas le plus simple, il peut simplement être constitué par un joint en élastomère vulcanisé, venant se loger dans une gorge appropriée comme dans l'exemple de la figure 1.

Pour des applications particulières, il peut également être constitué par un joint moulé en polyuréthane, tel que représenté en 25a sur la figure 2. Ce joint, relativement rigide, et pouvant même comporter un insert métallique assurant sa fixation par goujons et écrous 27, étant alors logé dans une rainure appropriée sans contre-dépouille pour permettre ce montage.

Enfin, pour des applications encore plus particulières, notamment au point de vue température, il est possible d'utiliser un joint métallo-plastique, la membrane flexible 9, par sa nature métallique, étant dans tous les cas résistante à la température.

Enfin, pour pallier à toute infiltration de fines particules solides dans la chambre à air 14 et de là dans l'atmosphère, il est souhaitable d'utiliser toujours une pression d'air de commande supérieure à la pression d'air de transport établie dans le réservoir refermé par la vanne.

Toutefois, il demeure bien entendu que la vanne selon l'invention pourrait tout aussi bien être utilisée comme vanne de fermeture pour des trémies ou silos, même sans pression intérieure, ou encore comme vanne de dérivation sur les tuyauteries de transport.

**Revendications**

1. **Vanne à boisseau** sphérique dont le tournant (2), monté mobile autour d'un axe (4,5) transversal à l'axe d'écoulement, comporte une calotte sphérique (1) dissociée du tournant (2), et coopérant avec un siège muni d'un joint (25,25a) pour permettre l'interruption ou l'établissement de l'écoulement et assurer l'étanchéité en position fermée grâce à une pression auxiliaire d'air comprimé, agissant sur un élément déformable, caractérisé par le fait que ledit élément déformable raccordant de manière étanche la calotte sphérique (1) au tournant (2) est constitué par une membrane flexible métallique (9) en forme de couronne circulaire dont les deux bords sont raccordés de manière étanche, respectivement avec la calotte (1) et le tournant (2), de manière à constituer entre les deux une chambre à air (14) raccordée par des percements appropriés (15, 16, 17, 18) à une alimentation extérieure (22) recevant la pression auxiliaire d'air de commande, ladite membrane flexible métallique (9) jouant en même temps le rôle de rappel élastique de la calotte sphérique dans une position telle, qu'en l'absence de pression dans la chambre à air (14), la calotte sphérique demeure à faible distance de la surface du joint (25, 25a) pour permettre la manoeuvre de rotation du tournant (2) sans contact avec le joint, alors qu'au contraire l'établissement de la pression auxiliaire d'air de commande dans la chambre (14) déplace la calotte sphérique vers l'extérieur jusqu'à venir en contact étanche avec le joint (25, 25a).

2. Vanne à boisseau sphérique selon la revendication 1, caractérisée par le fait que, si la vanne est utilisée pour fermer une enceinte sous pression, la pression d'air auxiliaire utilisée et supérieure à la pression maximum à l'intérieur de ladite enceinte.

3. Vanne selon une des revendications précédentes, caractérisée par le fait que son tournant (2) a une forme dégageant entièrement, en position d'ouverture, le passage à l'aplomb de l'ouverture de passage (26) au centre du siège.

4. Vanne selon une des revendications précédentes, caractérisée par le fait que le joint fixe (25, 25a) est réalisé en un matériau adapté aux conditions de fonctionnement de la vanne, et pouvant aller d'un simple joint en élastomère jusqu'à un joint métallo-plastique.

FIG. 1

EP 0 346 216 A1

FIG. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A- 859 489 (HEINEN)<br>* Page 5, ligne 87 - page 6, ligne 56 *<br>--- | 1,3,4 | F 16 K    5/20 |
| Y | NL-A-7 304 794 (NEDERLANDSE ONTWIKKELINGS MAATSCHAPPIJ)<br>* Figure 1 *<br>--- | 1,4 | |
| A | DE-A-3 124 486 (ILLY)<br>* Page 6, lignes 12-18 *<br>--- | 1,4 | |
| A | GB-A- 194 267 (HUGUENIN)<br>* Page 1, ligne 72 - page 2, ligne 45 *<br>--- | 1,4 | |
| A | GB-A-2 184 212 (HEEP)<br>* Page 1, ligne 106 - page 2, ligne 75 *<br>----- | 1,4 | |

DOMAINES TECHNIQUES
RECHERCHES (Int. Cl.4)

F 16 K

Le présent rapport a été établi pour toutes les revendications

| Lieu de la recherche | Date d'achèvement de la recherche | Examinateur |
|---|---|---|
| LA HAYE | 05-09-1989 | VERELST P.E.J. |